# EUROPÄISCHE PATENTANMELDUNG

(11) **EP 3 569 451 A1**
(43) Veröffentlichungstag der Anmeldung: **20.11.2019**
(21) Anmeldenummer: 19175145.2
(22) Anmeldetag: 17.05.2019
(51) Int. Cl.: B60R 19/48, E05F 15/73

(54) **HALTEVORRICHTUNG FÜR EINEN SENSOR**

(30) Priorität: 18.05.2018 DE 102018112117
(71) Anmelder: Huf Hülsbeck & Fürst GmbH & Co. KG, 42551 Velbert (DE)
(72) Erfinder: Thau, Wolfgang, 58285 Gevelsberg (DE)
(74) Vertreter: Patentanwälte Bals & Vogel

(57) **Zusammenfassung**

Die Erfindung betrifft eine Haltevorrichtung (100) für einen, insbesondere optischen, Sensor (101) an einer Öffnung (102) in einem außenliegenden Verkleidungsbauteil (103) eines Fahrzeuges, vorzugsweise an einem Stoßfänger oder einem Diffusor, wobei der Sensor (101) durch die Öffnung (102) Informationen mit dem Außenbereich des Fahrzeuges, insbesondere mithilfe von elektromagnetischen Wellen, austauschen kann. Die Haltevorrichtung (100) weist einen außenliegenden Halteabschnitt (10), welcher von außen an der Öffnung (102) zur Auflage bringbar ist, wobei durch den außenliegenden Halteabschnitt (10) die Öffnung (102) von außen zumindest abschnittsweise umrahmt wird, einen innenliegenden Halteabschnitt (20), welcher von innen an der Öffnung (102) zur Auflage bringbar ist, wobei der innenliegende Halteabschnitt (20) eine Tragstruktur (21, 22) für den Sensor (101) aufweist, und einen Befestigungsmechanismus (30) auf, durch welchen eine form- und/oder kraftschlüssige Befestigung der Haltevorrichtung (100) an einer Kante (104) der Öffnung (102) herstellbar ist.

## Beschreibung

Die vorliegende Erfindung betrifft eine Haltevorrichtung für einen, insbesondere optischen, Sensor an einer Öffnung in einem außenliegenden Verkleidungsbauteil eines Fahrzeuges, vorzugsweise an einem Stoßfänger oder einem Diffusor, nach dem unabhängigen Vorrichtungsanspruch. Ferner betrifft die Erfindung ein, insbesondere optisches, Sensorsystem zum Betätigen eines bewegbaren Teils, insbesondere einer Kofferraumklappe, eines Fahrzeuges nach dem unabhängigen Systemanspruch. Zudem betrifft die Erfindung ein Verfahren zum Befestigen eines, insbesondere optischen, Sensors, an einer Öffnung in einem außenliegenden Verkleidungsbauteil eines Fahrzeuges, vorzugsweise an einem Stoßfänger oder einem Diffusor, nach dem unabhängigen Verfahrensanspruch.

Bekannte Sensorsysteme zum Betätigen eines bewegbaren Teils, bspw. einer Kofferraumklappe, eines Fahrzeuges weisen zumeist Sensoren auf, die Informationen mit der Umgebung durch eine Öffnung in einem Verkleidungsbauteil, bspw. Stoßfänger oder Diffusor, des Fahrzeuges austauschen können. Als Sensoren können dabei funkgestützte Abstandssensoren oder optische Sensoren eingesetzt werden. Durch die Öffnung im bewegbaren Bauteil können jedoch Verunreinigungen zum Sensor gelangen. Dadurch kann der Sensor in seiner Funktion gestört werden. Außerdem gestaltet sich die Montage der Sensoren am Fahrzeug als schwierig.

Es ist daher Aufgabe der vorliegenden Erfindung, die voranstehend beschriebenen Nachteile zumindest teilweise zu überwinden. Zum einen ist es Aufgabe der vorliegenden Erfindung, eine Haltevorrichtung für einen, insbesondere optischen, Sensor an einer Öffnung in einem außenliegenden Verkleidungsbauteil eines Fahrzeuges, vorzugsweise an einem Stoßfänger oder einem Diffusor, bereitzustellen, welche eine einfache Montage ermöglicht und welche eine geschützte Anordnung des Sensors am Fahrzeug ermöglicht. Zum anderen ist es Aufgabe der vorliegenden Erfindung, ein Sensorsystem zum Betätigen eines bewegbaren Teils, insbesondere einer Kofferraumklappe, eines Fahrzeuges bereitzustellen, welches zuverlässig und störungsfrei im Betrieb ist und welches eine lange Lebensdauer aufweist. Zudem ist es Aufgabe der vorliegenden Erfindung, ein Verfahren zum Befestigen eines, insbesondere optischen, Sensors, an einer Öffnung in einem außenliegenden Verkleidungsbauteil eines Fahrzeuges, vorzugsweise an einem Stoßfänger oder einem Diffusor, bereitzustellen, welches einfach und schnell ausgeführt werden kann.

Die voranstehende Aufgabe wird durch sämtliche Merkmale des unabhängigen Vorrichtungsanspruches, des unabhängigen Systemanspruches sowie durch sämtliche Merkmale des unabhängigen Verfahrensanspruches gelöst. Weitere Vorteile und Details der Erfindung ergeben sich aus den jeweiligen Unteransprüchen, der Beschreibung und den Zeichnungen. Dabei gelten Vorteile und Details, die im Zusammenhang mit der erfindungsgemäßen Haltevorrichtung und mit dem erfindungsgemäßen Sensorsystem beschrieben sind, selbstverständlich auch im Zusammenhang mit dem erfindungsgemäßen Verfahren und jeweils umgekehrt, sodass bzgl. der Offenbarung zu den einzelnen Erfindungsaspekten stets wechselseitig Bezug genommen wird bzw. werden kann.

Die Erfindung stellt eine Haltevorrichtung für einen, insbesondere optischen, Sensor an einer Öffnung in einem außenliegenden Verkleidungsbauteil eines Fahrzeuges, vorzugsweise an einem Stoßfänger oder einem Diffusor, bereit, wobei der Sensor durch die Öffnung Informationen mit dem Außenbereich des Fahrzeuges, insbesondere mithilfe von elektromagnetischen Wellen, austauschen kann. Die Haltevorrichtung umfasst dabei einen (bzgl. des Verkleidungsbauteils) außenliegenden Halteabschnitt, welcher von außen (im Montagezustand) an der Öffnung zur Auflage bringbar ist, wobei durch den außenliegenden Halteabschnitt die Öffnung von außen zumindest abschnittsweise umrahmt wird, einen (bzgl. des Verkleidungsbauteils) innenliegenden Halteabschnitt, welcher von innen (im Montagezustand) an der Öffnung zur Auflage bringbar ist, wobei der innenliegende Halteabschnitt eine Tragstruktur für den Sensor aufweist, und einen Befestigungsmechanismus, durch welchen eine form- und/oder kraftschlüssige Befestigung der Haltevorrichtung an einer Kante der Öffnung, insbesondere durch ein Einschieben der Kante zwischen dem außenliegenden Halteabschnitt und dem innenliegenden Halteabschnitt, herstellbar ist.

Unter einem Sensor im Sinne der Erfindung kann vorzugsweise ein optischer Sensor, bevorzugt eine Kamera verstanden werden, die elektromagnetische Wellen, bspw. im sichtbaren Bereich oder Infrarotbereich nutzen kann, um den Außenbereich des Fahrzeuges zu überwachen, zu analysieren und/oder auszuwerten. Gleichwohl ist es denkbar, dass der optische Sensor mit einem Sender (insbesondere in Form einer Lichtquelle) und Empfänger (insbesondere in Form eines optischen Sensorarray, CCDs oder CMOS-Bildsensor) ausgestattet sein kann und als eine Art Lichtschranke fungieren kann bzw. zur Durchführung von Time-of-Flight Verfahren geeignet sind. Das Sensorsystem kann eine Steuereinheit aufweisen, die seine Funktion steuert. Der Sensor kann weiterhin dazu ausgebildet sein, eine Vorfeldbeleuchtung des Fahrzeuges einzuschalten, wenn der Sensor eine Aktivierungshandlung eines, insbesondere berechtigten, Benutzers erfasst. Des Weiteren kann der Sensor dazu ausgebildet sein, eine optische Taste, bspw. in Form eines Emblems des Fahrzeuges, auf die Fahrbahn zu projizieren, um einen Erfassungsbereich des Sensors zu markieren, in welchem eine Aktivierungshandlung eines, insbesondere berechtigten, Benutzers erfasst werden kann. Das Sensorsystem im Sinne der Erfindung kann mit einem Sicherheitssystem des Fahrzeuges in Kommunikation stehen, um eine Berechtigung eines Benutzers abzufragen, um das bewegliche Teil des Fahrzeuges, bspw. die Kofferraumklappe, öffnen zu dürfen. Für die Kommunikation mit dem Sicherheitssystem kann eine drahtlose Verbindung, bspw. mittels Funkwellen genutzt werden, die mittels der Steuereinheit des Sensorsystems ausgeführt werden kann. Somit kann das Sensorsystem einen Teil eines Keyless-Go-Systems oder eines Keyless-Entry-Systems bilden. Mit anderen Worten ist es denkbar, dass das Sensorsystem zum automatischen Verriegeln und/oder Entriegeln sowie zum automatischen Öffnen und/oder Schließen des bewegbaren Teils des Kraftfahrzeuges genutzt werden kann. Weiterhin ist es im Sinne der Erfindung denkbar, dass der außenliegende Halteabschnitt und der innenliegende Halteabschnitt, vorzugsweise mit dem Befestigungsabschnitt, ein monolithisches und/oder materialeinheitliches Bauteil bilden, welches sogar einhändig für eine einfache Montage am Fahrzeug gehandhabt werden kann.

Der Erfindungsgedanke liegt dabei darin, dass der Befestigungsmechanismus durch die mechanische Wechselwirkung mit der Öffnung, insbesondere mit einer Kante der Öffnung, im außenliegenden Verkleidungsbauteil eine einfache und sichere, insbesondere diebstahlsichere und/oder verliersichere, vorzugsweise form- und/oder kraftschlüssige Befestigung der Haltevorrichtung am Fahrzeug ermöglicht. Im Rahmen der Erfindung kann der Befestigungsmechanismus unterschiedliche Geometrien und Verbindungsmöglichkeiten bereitstellen, die eine form- und/oder kraftschlüssige Befestigung der Haltevorrichtung am Fahrzeug ermöglicht, die leicht und ohne Hilfsmittel und ggf. werkzeugfrei herstellbar ist und die nicht ohne einen erheblichen Aufwand und nicht ohne Hilfsmittel wieder gelöst werden kann. Bspw. kann der Befestigungsmechanismus eine Schnappkupplung bereitstellen, die an einem Hinterschnitt der Kante der Öffnung (zumindest formschlüssig) hinterschnappen bzw. verkanten kann, wodurch die Haltervorrichtung verliersicher an der Öffnung befestigt werden kann. Durch die Haltevorrichtung kann der Sensor geschützt und unzugänglich von außen an der Öffnung positioniert werden.

Zudem liegt der Erfindungsgedanke darin, dass der außenliegende Halteabschnitt die Öffnung von außen zumindest abschnittsweise umrahmt. Zudem kann der außenliegende Halteabschnitt eine Abdeckfunktion, eine Verstärkungsfunktion, eine Filterfunktion und/oder Lichtleitfunktion für den Sensor aufweisen. Außerdem liegt der Erfindungsgedanke darin, dass der innenliegende Halteabschnitt mithilfe der Tragstruktur ein einfache, insbesondere verliersichere, vorzugsweise form- und/oder kraftschlüssige Befestigung des Sensors an der Haltevorrichtung ermöglicht. Der Sensor wird also an der Haltevorrichtung befestigt und die Haltevorrichtung an der Öffnung im außenliegenden Verkleidungsbauteil des Fahrzeuges. Über die Haltevorrichtung wird somit der Sensor am Fahrzeug befestigt.

Gleichwohl ist es im Rahmen der Erfindung denkbar, dass sowohl der außenliegende Halteabschnitt als auch der innenliegende Halteabschnitt von einer Seite des außenliegenden Verkleidungsbauteils des Fahrzeuges positioniert werden. Der Befestigungsmechanismus kann mindestens eine Schraube oder ein anderes Element für eine form- und/oder kraftschlüssige Befestigung aufweisen, die von außen durch das außenliegende Verkleidungsbauteil eingeführt wird und mit dem innenliegenden Halteabschnitt verschraubt wird. Den außenliegenden Halteabschnitt kann dabei der Kopf der Schraube bilden. Die Schraube kann dabei an der Oberfläche des außenliegenden Verkleidungsbauteils versenkt werden, um die Oberfläche des außenliegenden Verkleidungsbauteils bündig abzuschließen und nicht herauszustehen.

Ferner kann die Erfindung bei einer Haltevorrichtung vorsehen, dass der Befestigungsmechanismus zwischen dem außenliegenden Halteabschnitt und dem innenliegenden Halteabschnitt ausgebildet ist. Der Befestigungsmechanismus kann somit geschützt zwischen dem außenliegenden Halteabschnitt und dem innenliegenden Halteabschnitt der Haltevorrichtung angeordnet sein. Dadurch kann der Befestigungsmechanismus nach dem Auslösen verdeckt verbleiben, sodass eine Auflösung der Befestigungsmechanismus von außen nicht ohne einen erheblichen Aufwand und nicht ohne Hilfsmittel möglich ist.

Vorzugsweise kann die form- und/oder kraftschlüssige Befestigung der Haltevorrichtung an der Kante der Öffnung durch ein Einschieben der Kante zwischen dem außenliegenden Halteabschnitt und dem innenliegenden Halteabschnitt hergestellt werden. Dabei kann die Haltevorrichtung solange entlang der Öffnung geschoben werden bis der Befestigungsmechanismus auslösen kann. Die Öffnung kann sich zu einem Bereich verjüngen und in diesem engen Bereich einen Hinterschnitt für den Befestigungsmechanismus aufweisen. Dieser Bereich kann in Richtung der Fahrbahn nach unten zeigen. Dabei kann ein Monteur mit nur einer Hand die Haltevorrichtung halten, dann die Haltevorrichtung an der Öffnung in einem breiten, insbesondere bzgl. der Fahrbahn oberen, Bereich positionieren, sodass die Kante der Öffnung zwischen dem außenliegenden Halteabschnitt und dem innenliegenden Halteabschnitt aufgenommen werden kann. Dann kann die Haltevorrichtung, immer noch mit einer Hand gehalten, so entlang der Öffnung aus dem oberen breiten Bereich zum unteren engen Bereich der Öffnung geschoben werden bis die Kante der Öffnung zwischen dem außenliegenden Halteabschnitt und dem innenliegenden Halteabschnitt gelangt. Danach kann die Haltevorrichtung entlang der Öffnung noch weiter nach unten geschoben werden, bis der Befestigungsmechanismus mit dem Hinterschnitt in dem engen unteren Bereich der Öffnung in Berührung kommt und dort verkanten kann. Somit kann eine einfache, bequeme und sogar einhändige Montage der Haltevorrichtung an der Öffnung ermöglicht werden. Nach dem Auslösen des Befestigungsmechanismus steht der Befestigungsmechanismus im Weg, um die Haltevorrichtung wieder nach oben zu bewegen, wo sie aus dem breiteren Bereich der Öffnung entnommen werden kann. Somit kann vorteilhafterweise eine diebstahlsichere Befestigung der Haltevorrichtung am Fahrzeug ermöglicht werden. Über die Haltevorrichtung wird der Sensor ebenfalls diebstahlsicher am Fahrzeug befestigt.

Weiterhin kann die Erfindung bei einer Haltevorrichtung vorsehen, dass der außenliegende Halteabschnitt einen Rahmen aufweist, durch welchen die Öffnung von außen zumindest abschnittsweise umrahmt wird. Der Rahmen kann als ein Positionierungsmittel für die Haltevorrichtung bei der Montage an der Öffnung dienen. Zudem kann der Rahmen eine Verstärkungsfunktion aufweisen. Außerdem kann der Rahmen zur Abdeckfunktion, Filterfunktion und/oder Lichtleitfunktion für den Sensor beitragen. Denkbar ist, dass der Rahmen eine, bspw. offene U-Form, bilden kann, die an die Form der Öffnung im außenliegenden Verkleidungsbauteil des Fahrzeuges angepasst ist. Die U-Form kann sich in Richtung der offenen Schenkel aufweiten, sodass die U-Form an einer sich verjüngenden Öffnung bündig anliegen kann.

Des Weiteren kann die Erfindung bei einer Haltevorrichtung vorsehen, dass der Rahmen von außen im Wesentlichen flächenbündig zum außenliegenden Verkleidungsbauteil zur Auflage bringbar ist. Somit kann der Rahmen das optische Erscheinungsbild der Haltevorrichtung an das Erscheinungsbild des außenliegenden Verkleidungsbauteils anpassen. Durch eine flächenbündige Auflage des Rahmens zum außenliegenden Verkleidungsbauteil kann das Erscheinungsbild des Verkleidungsbauteils durch die Anbringung des Sensors vervollständigt werden, sodass die Öffnung abgeschlossen werden kann.

Zudem ist es im Rahmen der Erfindung bei einer Haltevorrichtung denkbar, dass der außenliegende Halteabschnitt ein Abdeckelement aufweist, durch welches der Sensor Informationen mit dem Außenbereich des Fahrzeuges, insbesondere mithilfe von elektromagnetischen Wellen, austauschen kann. Das Abdeckelement kann im Rahmen der Haltevorrichtung eine Abdeckfunktion, eine Abdichtfunktion, eine Schutzfunktion, eine Filterfunktion und/oder Lichtleitfunktion für den Sensor erfüllen.

Außerdem ist es im Rahmen der Erfindung bei einer Haltevorrichtung möglich, dass das Abdeckelement von außen im Wesentlichen flächenbündig zum außenliegenden Verkleidungsbauteil zur Auflage bringbar ist. Somit kann das Abdeckelement das optische Erscheinungsbild der Haltevorrichtung an das Erscheinungsbild des außenliegenden Verkleidungsbauteils anpassen. Durch eine flächenbündige Auflage des Abdeckelementes zum außenliegenden Verkleidungsbauteil kann das Erscheinungsbild des Verkleidungsbauteils durch das Abdeckelement vervollständigt und die Öffnung abgeschlossen werden.

Ferner kann die Erfindung bei einer Haltevorrichtung vorsehen, dass der außenliegende Halteabschnitt, insbesondere das Abdeckelement, durchlässig für elektromagnetische Wellen, insbesondere für bestimmte Wellenlängen des elektromagnetischen Spektrums, vorzugsweise für sichtbares Licht oder ultraviolettes Licht, ausgebildet ist. Somit kann das Abdeckelement den Sensor zuverlässig schützen und/oder abdichten und zugleich die störungsfreie Funktion des Sensors, insbesondere den störungsfreien Austausch von Information mit dem Außenbereich des Fahrzeuges ermöglichen.

Weiterhin kann die Erfindung bei einer Haltevorrichtung vorsehen, dass der außenliegende Halteabschnitt, insbesondere das Abdeckelement, eine Funktionsbeschichtung aufweist. Die Funktionsbeschichtung kann vorteilhafterweise dazu dienen, den außenliegenden Halteabschnitt, insbesondere das Abdeckelement, vor Verschmutzung und/oder vor Verkratzen zu schützen. Als Funktionsbeschichtung kann eine dünne Schicht (4-8 nm) auf Silikonbasis dienen, die auflackiert, aufgesprüht, mittels Eintauchen in eine Lösung oder mittels eines vakuumbasierten Beschichtungsverfahrens ausgebildet wurde. Als vorteilhaftes vakuumbasiertes Beschichtungsverfahren kann die physikalische Gasphasenabscheidung gewählt werden, die es ermöglicht, dünne Schichten im Nanometerbereich auszubilden. Denkbar ist weiterhin, dass die Funktionsbeschichtung thermisch, bspw. bei 120 °C - 130°C, oder mithilfe von UV-Strahlung gehärtet werden kann. Die Funktionsbeschichtung kann vorzugsweise gegen mechanische Beschädigungen schützen. Zudem kann die Funktionsbeschichtung wasserabweisend wirken, um die Sicht des Sensors freizuhalten.

Des Weiteren kann die Erfindung bei einer Haltevorrichtung vorsehen, dass die Funktionsbeschichtung einen optischen Filter für bestimmte Wellenlängen des elektromagnetischen Spektrums aufweist, um bestimmte Wellenlängen des elektromagnetischen Spektrums, vorzugsweise für sichtbares Licht oder ultraviolettes Licht, durchzulassen. Denkbar sind dabei Wellenlängen zwischen 1 bis 500 nm, insbesondere zwischen 10 bis 400 nm, vorzugsweise zwischen 10 bis 100 nm. Somit kann ein hochfrequentes Spektrum durch den optischen Filter zum Sensor durchgelassen werden, der eine hohe Auflösung am Sensor bereitstellt. Der Sensor kann zum Sensieren solcher Wellen einen Photodetektor aufweisen. Zusammen mit einer Steuereinheit in Form einer Kameraelektronik kann ein elektrisches Abbild vom Außenbereich des Fahrzeuges erfasst werden.

Zudem ist es im Rahmen der Erfindung denkbar, dass die Funktionsbeschichtung eine LED-/ oder LCD-Schicht aufweist, um den außenliegenden Halteabschnitt, insbesondere das Abdeckelement, in einem Ruhemodus des Sensors abzudunkeln oder in einem Betriebsmodus des Sensors durchlässig zumindest für bestimmte elektromagnetische Wellen zu schalten. Somit kann das optische Erscheinungsbild des außenliegenden Verkleidungsbauteils im Ruhemodus des Sensors nahezu unverändert und der Sensor so lange ungesehen bleiben, bis der Sensor in den Betriebsmodus geschaltet wird.

Außerdem kann die Erfindung bei einer Haltevorrichtung vorsehen, dass die Funktionsbeschichtung eine Tönungs- und/oder Lackierungsschicht aufweist. Die Tönungs- und/oder Lackierungsschicht kann dazu dienen, den außenliegenden Halteabschnitt, insbesondere das Abdeckelement, farblich hervorzuheben und/oder an das Erscheinungsbild des Verkleidungsbauteils anzupassen. Trotz der Tönungs- und/oder Lackierungsschicht kann die Funktionsbeschichtung weiterhin durchlässig für bestimmte Wellenlängen des elektromagnetischen Spektrums, vorzugsweise für sichtbares Licht oder ultraviolettes Licht, sein. Auch kann zumindest ein Teil der nach außen gerichteten Oberfläche der Haltevorrichtung, die insbesondere lichtdurchlässig ist, mit einer Antihaft-Beschichtung, insbesondere mit Lotuseffekt, versehen sein, um insbesondere Verschmutzungen von außen zu reduzieren.

Ferner kann die Erfindung bei einer Haltevorrichtung vorsehen, dass der außenliegende Halteabschnitt, insbesondere das Abdeckelement, einen, insbesondere trichterförmigen und/oder prismatischen und/oder pyramidalen, Objektivkörper und/oder optische Linse aufweist bzw. bildet, um die elektromagnetischen Wellen zu sammeln, zu formen und/oder zu bündeln. Der Objektivkörper kann vorteilhafterweise die elektromagnetischen Wellen derart einfangen, dass ein reelles Bild in der Bildebene des Sensors erzeugt wird. Der Objektivkörper kann vorteilhafterweise eine Licht sammelnde Oberfläche aufweisen. Zudem kann der Objektivkörper mindestens eine Sammellinse aufweisen, um den Informationsaustausch des Sensors mit dem Außenbereich des Fahrzeuges zu begünstigen.

Weiterhin ist es denkbar, dass der Objektivkörper und/oder die optische Linse bzgl. des außenliegenden Verkleidungsbauteils nach innen zum Sensor gewölbt ist. Somit können die elektromagnetischen Wellen auf eine vorteilhafte Weise gesammelt, geformt und/oder gebündelt werden.

Des Weiteren kann die Erfindung bei einer Haltevorrichtung vorsehen, dass der Objektivkörper und/oder die optische Linse zumindest eine Licht sammelnde Fläche aufweist, die an einem Detektionsbereich des Sensors zur Auflage bringbar und/oder mit dem Detektionsbereich des Sensors, insbesondere stoffschlüssig, vorzugsweise durch Schweißen, bevorzugt durch Laserschweißen, verbindbar ist. Somit können die Verluste und Streueffekte, wie z. B. ein mehrfaches Brechen, beim Empfangen der elektromagnetischen Wellen reduziert werden.

Zudem kann die Erfindung bei einer Haltevorrichtung vorsehen, dass der außenliegende Halteabschnitt, der innenliegende Halteabschnitt, die Tragstruktur für den Sensor an der Haltevorrichtung und der Befestigungsmechanismus für die Haltevorrichtung an der Kante der Öffnung ein monolithisches und/oder materialeinheitliches (bzw. einstückiges) Bauteil (vorzugsweise aus einem Kunststoff), insbesondere ein 3D-Bauteil, vorzugsweise ein Spritzgussbauteil, bevorzugt ein 2-Komponenten-Spritzgussbauteil, besonders bevorzugt ein 3D-Druckbauteil (bspw. aus einem 3D-Drucker), bilden. Somit kann ermöglicht werden, dass der Monteur bei der Montage der Haltevorrichtung am Fahrzeug die Haltevorrichtung einhändig handhaben kann. Bei der Montage der Haltevorrichtung kann sie einfach in die Öffnung hineingeschoben werden bis der Befestigungsmechanismus auslösen kann. Der Sensor kann wiederum vor der Montage oder nach der Montage der Haltevorrichtung am Fahrzeug an der Haltevorrichtung befestigt werden. Mithilfe einer solchen einstückig ausgebildeten Haltevorrichtung kann der Sensor nach der Befestigung an der Haltevorrichtung geschützt und unzugänglich von außen hinter der Öffnung im außenliegenden Verkleidungsbauteil positioniert werden. Die monolithisch ausgebildete Haltevorrichtung ermöglicht nach der Befestigung am Fahrzeug außerdem einen zuverlässigen Diebstahlschutz, da das Lösen des Befestigungsmechanismus, ohne die Haltevorrichtung zu beschädigen und/oder Löcher in das Verkleidungsbauteil zu bohren, nicht mehr möglich ist.

Außerdem kann die Erfindung bei einer Haltevorrichtung vorsehen, dass der Befestigungsmechanismus eine Labyrinthführung zwischen dem außenliegenden Halteabschnitt und dem innenliegenden Halteabschnitt für die Kante der Öffnung aufweist. Auf diese Weise kann vorteilhafterweise nicht nur eine einfache Befestigung der Haltevorrichtung am Fahrzeug, sondern zugleich eine nach innen abgedichtete Anordnung des Sensors gewährleistet werden. Gleichwohl ist es aber auch denkbar, dass ein zusätzliches Dichtungselement innerhalb des Befestigungsmechanismus vorgesehen sein kann, um für eine zusätzliche Abdichtung zu sorgen.

Zudem kann die Erfindung bei einer Haltevorrichtung vorsehen, dass der Befestigungsmechanismus mindestens ein erstes Rastelement und/oder ein zweites Rastelement für die Kante der Öffnung aufweist, durch welches bzw. durch welche eine form- und/oder kraftschlüssige Befestigung der Haltevorrichtung mit mindestens einem ersten Hinterschnitt und/oder einem zweiten Hinterschnitt an der Kante der Öffnung herstellbar ist. Dadurch kann eine Schnappkupplung zwischen der Haltevorrichtung und der Öffnung im Verkleidungsbauteil zur Befestigung der Haltevorrichtung hergestellt werden. Eine Schnappkupplung kann vorteilhaft sein, um die Befestigung der Haltevorrichtung in eine Richtung zu ermöglichen und in eine entgegengesetzte Richtung ein Abnehmen der Haltevorrichtung zu verhindern. Auf diese Weise kann ein wirksamer Diebstahlschutz realisiert werden. Das erste Rastelement und/oder das zweite Rastelement können dabei durch Einschieben der Haltevorrichtung entlang der Öffnung aus dem oberen breiten Bereich zum unteren engen Bereich der Öffnung gespreizt bzw. vorgespannt werden und nach dem Erreichen des unteren engen Bereiches der Öffnung an dem jeweiligen Hinterschnitt sich sprungartig entspannen und in den Hinterschnitten verrasten. Das erste Rastelement und/oder das zweite Rastelement können mit anderen Worten an dem jeweiligen Hinterschnitt hinterschnappen und somit eine form- und/oder kraftschlüssige Verbindung, insbesondere eine Schnappkupplung mit der Kante der Öffnung herstellen.

Ferner kann die Erfindung bei einer Haltevorrichtung vorsehen, dass das erste Rastelement und/oder das zweite Rastelement federnd und/oder elastisch verformbar ausgebildet sind. Somit kann bei einem formschlüssigen Wechselwirken der Rastelemente mit den Hinterschnitten eine kraftschlüssige Beaufschlagung der Rastelemente in den Eingriff mit den Hinterschnitten bereitgestellt werden. Eine solche Befestigung ist vorteilhafterweise ruckelfrei und zudem stabil. Außerdem ermöglicht eine solche Befestigung einen Ausgleich von Toleranzen zwischen den Bauteilen bei der Montage oder in Folge von unterschiedlichen Setzverhalten bei Temperaturschwankungen und unter Einfluss der Witterung im Betrieb des Fahrzeuges.

Weiterhin kann die Erfindung bei einer Haltevorrichtung vorsehen, dass das erste Rastelement und/oder das zweite Rastelement Greifarme bilden, die beim Einschieben der Kante der Öffnung zwischen dem außenliegenden Halteabschnitt und dem innenliegenden Halteabschnitt spreizbar sind bis das erste Rastelement und/oder das zweite Rastelement an mindestens einem ersten Hinterschnitt und/oder an einem zweiten Hinterschnitt an der Kante der Öffnung einschnappen können. Somit kann eine einfache, eigenhändige Montage der Haltevorrichtung ermöglicht werden, die nicht ohne einen erheblichen Aufwand und nicht ohne Hilfsmittel gelöst werden kann.

Des Weiteren kann die Erfindung bei einer Haltevorrichtung vorsehen, dass die Tragstruktur mindestens ein erstes Befestigungselement und/oder ein zweites Befestigungselement für den Sensor aufweist, durch welches bzw. durch welche eine form- und/oder kraftschlüssige Befestigung des Sensors an der Haltevorrichtung herstellbar ist. Mithilfe der Befestigungselemente kann der Sensor einfach und bequem, vorzugsweise lösbar bzw. austauschbar an der Haltevorrichtung befestigt werden.

Zudem kann die Erfindung im Rahmen einer Haltevorrichtung vorsehen, dass die Tragstruktur eine, vorzugsweise U-förmige, Halteklammer für den Sensor, insbesondere zwischen dem ersten Befestigungselement und dem zweiten Befestigungselement, bilden kann. Auf diese Weise kann eine besonders elegante Befestigungslösung für den Sensor bereitgestellt werden.

Außerdem kann die Erfindung bei einer Haltevorrichtung vorsehen, dass die Tragstruktur mindestens ein Befestigungsmittel, insbesondere am ersten Befestigungselement und/oder am zweiten Befestigungselement, aufweist, welches mit einem Befestigungsgegenmittel des Sensors in eine form- und/oder kraftschlüssige Verbindung bringbar ist. Denkbar sind dabei Befestigungsmittel in Form von Öffnungen, die entsprechende Befestigungsgegenmittel, bspw. in Form von Nocken aufnehmen können.

Ferner stellt die Erfindung ein (insbesondere optisches) Sensorsystem (vorzugsweise mit einer Time-of-Flight Funktion) zum Betätigen eines bewegbaren Teils, insbesondere einer Kofferraumklappe, eines Fahrzeuges bereit, aufweisend: eine Haltevorrichtung, die wie oben beschrieben ausgebildet sein kann und einen, insbesondere optischen, Sensor, vorzugsweise in Form einer Kamera, der mithilfe der Haltevorrichtung an einer Öffnung in einem außenliegenden Verkleidungsbauteil des Fahrzeuges, vorzugsweise an einem Stoßfänger oder einem Diffusor, befestigbar ist, wobei der Sensor durch die Öffnung Informationen mit dem Außenbereich des Fahrzeuges, insbesondere mithilfe von elektromagnetischen Wellen, austauschen kann. Der Sensor kann eine Kamera (und/oder ein optischer Sensorarray) sein. Hierbei kann zusätzlich eine optische Lichtquelle vorhanden sein. Mithilfe der Kamera kann ein reelles Bild des Außenbereiches des Fahrzeuges aufgenommen werden. Dadurch kann der Außenbereich des Fahrzeuges sicher überwacht werden, Aktivierungshandlungen und sogar komplexe Bewegungsmuster zuverlässig erkannt werden, und Störungsfaktoren beim Betrieb des Sensors zuverlässig erkannt werden. Weiterhin kann mithilfe der Kamera ein potenzieller Benutzer (oder nur Bereich von ihm) zuverlässig erkannt werden. Zudem können mithilfe der Erfindung Gegenstände und/oder Personen erkannt und damit geschützt werden, die im Wege des bewegbaren Teils des Fahrzeuges bei seiner Bewegung stehen. Somit kann ein sicherer Betrieb des bewegbaren Teils des Fahrzeuges gewährleistet werden. Außerdem werden mithilfe des Sensorsystems die gleichen Vorteile erreicht, die oben im Zusammenhang mit der erfindungsgemäßen Haltevorrichtung beschrieben wurden. Auf diese Vorteile wird vorliegend vollumfänglich Bezug genommen.

Weiterhin kann die Erfindung im Rahmen eines Sensorsystems vorsehen, dass der Sensor dazu ausgebildet ist, eine Vorfeldbeleuchtung des Fahrzeuges einzuschalten, wenn der Sensor eine Aktivierungshandlung eines, insbesondere berechtigten, Benutzers erfasst. Der Sensor kann somit nicht nur zur Betätigung des bewegbaren Teils, sondern zum Auslösen von weiteren Funktionen im Fahrzeug dienen. Zum Auslösen von weiteren Funktionen kann der Sensor dieselbe Aktivierungshandlung oder eine andere Aktivierungshandlung erfassen. Mithilfe des erfindungsgemäßen Systems können somit die Funktionen des Sensorsystems nicht nur verbessert, sondern auch erweitert werden.

Des Weiteren kann bei einem Sensorsystem im Rahmen der Erfindung vorgesehen sein, dass der Sensor dazu ausgebildet ist, eine optische Taste, insbesondere ein Emblem des Fahrzeuges, auf die Fahrbahn zu projizieren, um einen Erfassungsbereich des Sensors zu markieren, in welchem eine Aktivierungshandlung eines, insbesondere berechtigten, Benutzers erfasst werden kann. Somit kann dem Benutzer signalisiert werden, wo und wie das Sensorsystem aktiviert werden kann, um eine Bewegung des bewegbaren Teils auszulösen. Dadurch kann der Benutzerkomfort erhöht werden.

Zudem kann die Erfindung bei einem Sensorsystem vorsehen, dass das Sensorsystem eine Sende- und Empfangseinheit für eine Kommunikationsverbindung mit einem Sicherheitssystem des Fahrzeuges aufweist, welches dazu ausgebildet ist, eine Berechtigung eines Benutzers, insbesondere mittels einer ID-Abfrage, abzufragen. Somit kann das Sensorsystem einen Teil eines Keyless-Go-Systems oder eines Keyless-Entry-Systems werden.

Außerdem kann die Erfindung bei einem Sensorsystem vorsehen, dass der Sensor dazu ausgelegt ist, ein Sicherheitssystem des Fahrzeuges zu wecken, um eine ID-Abfrage durchzuführen, wenn eine Aktivierungshandlung eines Benutzers durch den Sensor erfasst wurde, bevor das bewegbare Teil betätigt wird, oder dass der Sensor einschaltbar ist, wenn ein berechtigter Benutzer durch das Sicherheitssystem des Fahrzeuges verifiziert wurde. Somit kann der Einsatzbereich des Sensorsystems erweitert werden.

Ferner stellt die Erfindung ein Verfahren zum Befestigen eines, insbesondere optischen, Sensors, an einer Öffnung in einem außenliegenden Verkleidungsbauteil eines Fahrzeuges, vorzugsweise an einem Stoßfänger oder einem Diffusor, mithilfe einer Haltevorrichtung bereit, die wie oben beschrieben ausgebildet sein kann, wobei der Sensor durch die Öffnung Informationen mit dem Außenbereich des Fahrzeuges, insbesondere mithilfe von elektromagnetischen Wellen, austauschen kann. Das erfindungsgemäße Verfahren weist folgende Schritte auf:
a) Ansetzen der Haltevorrichtung an der Öffnung, sodass die Kante der Öffnung zwischen dem außenliegenden Halteabschnitt und dem innenliegenden Halteabschnitt der Haltevorrichtung aufgenommen werden kann,
b) Verschieben der Haltevorrichtung entlang der Öffnung bis der Befestigungsmechanismus der Haltevorrichtung mit der Kante der Öffnung eine form- und/oder kraftschlüssige Verbindung herstellt.

Das erfindungsgemäße Verfahren ermöglicht eine schnelle, einfache und zuverlässige Montage des Sensors am Fahrzeug. Zudem werden mithilfe des erfindungsgemäßen Verfahrens die gleichen Vorteile erreicht werden, die oben im Zusammenhang mit dem erfindungsgemäßen Sensorsystem und/oder der erfindungsgemäßen Haltevorrichtung beschrieben wurden, auf die vorliegend vollumfänglich Bezug genommen wird.

Weiterhin kann das Verfahren im Rahmen der Erfindung mindestens einen weiteren Schritt aufweisen:
c) Befestigen des Sensors an der Tragstruktur,
wobei insbesondere der Schritt c) vor dem Schritt a) oder nach dem Schritt b) ausgeführt wird.

Somit wird eine flexible Montage des Sensors gewährleistet.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig.1: eine Haltevorrichtung im Sinne der Erfindung aus unterschiedlichen Ansichten,
- Fig. 2: ein Wirkprinzip einer Haltevorrichtung im Sinne der Erfindung,
- Fig. 3: eine schematische Darstellung eines ersten Verfahrensschrittes bei einer Befestigung einer Haltevorrichtung im Sinne der Erfindung an einer Öffnung in einem außenliegenden Verkleidungsbauteil eines Fahrzeuges,
- Fig. 4: eine schematische Darstellung eines zweiten Verfahrensschrittes bei einer Befestigung einer Haltevorrichtung im Sinne der Erfindung an einer Öffnung in einem außenliegenden Verkleidungsbauteil eines Fahrzeuges,
- Fig. 5: eine perspektivische Ansicht auf eine Haltevorrichtung im Sinne der Erfindung,
- Fig. 6: eine Haltevorrichtung gemäß der Figur 5 mit einem Abdeckelement für den Sensor aus unterschiedlichen Ansichten,
- Fig. 7: eine perspektivische Ansicht auf eine Haltevorrichtung gemäß einer Ausführungsform der Erfindung,
- Fig. 8: eine perspektivische Ansicht auf eine Haltevorrichtung gemäß einer weiteren Ausführungsform der Erfindung,
- Fig. 9: eine perspektivische Ansicht auf eine Haltevorrichtung gemäß einer noch weiteren Ausführungsform der Erfindung, und
- Fig. 10: eine schematische Darstellung einer Haltevorrichtung im Sinne der Erfindung aus einer Sicht von innen bzgl. eines Verkleidungsbauteils eines Fahrzeuges.

In den nachfolgenden Figuren werden für die gleichen technischen Merkmale auch von unterschiedlichen Ausführungsbeispielen die identischen Bezugszeichen verwendet.

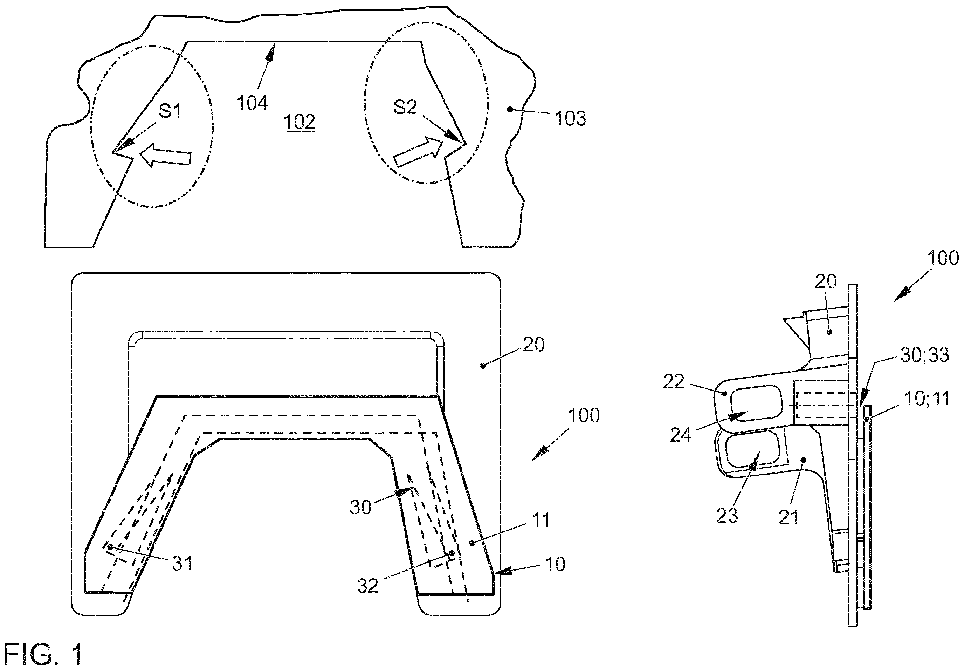

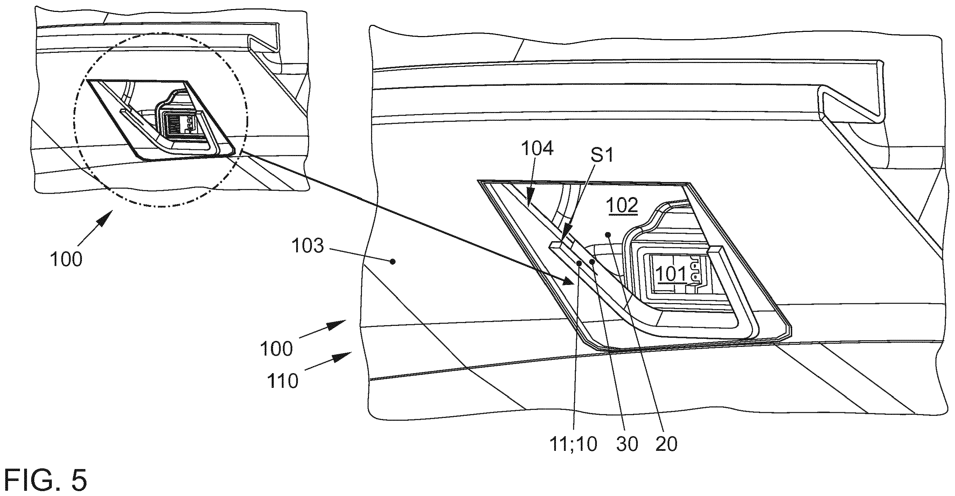

Die Figuren 1 bis 4 und 6 zeigen eine Haltevorrichtung 100 für einen, insbesondere optischen, Sensor 101 an einer Öffnung 102 in einem außenliegenden Verkleidungsbauteil 103 eines Fahrzeuges. Der Sensor 101 wird in den nachfolgenden Figuren 5, 7 bis 10 angedeutet. Das außenliegende Verkleidungsbauteil 103 des Fahrzeuges kann bspw. ein Stoßfänger oder ein Diffusor sein. Der Sensor 101 kann dazu dienen, eine Aktivierungshandlung eines Benutzers zu erfassen, die zum Betätigen eines bewegbaren Teils des Fahrzeuges, bspw. in Form einer Kofferraumklappe führen kann. Zum Erfassen der Aktivierungshandlung kann der Sensor 101 durch die Öffnung 102 im außenliegenden Verkleidungsbauteil 103 Informationen mit dem Außenbereich des Fahrzeuges, insbesondere mithilfe von elektromagnetischen Wellen, austauschen.

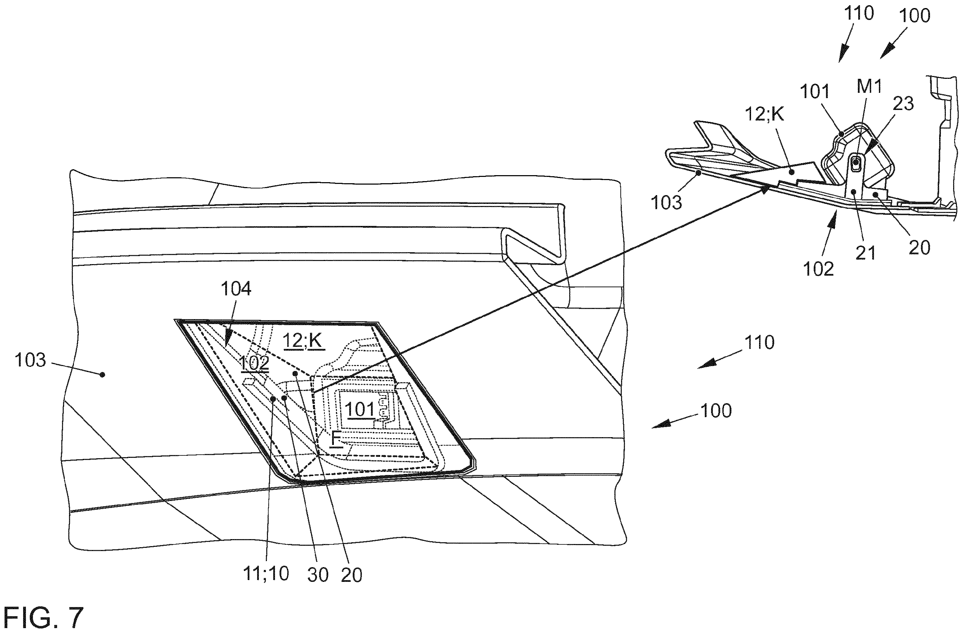

Die erfindungsgemäße Haltevorrichtung 100 umfasst dabei einen (bzgl. des Verkleidungsbauteils 103) außenliegenden Halteabschnitt 10, welcher von außen an der Öffnung 102 zur Auflage bringbar ist, wobei durch den außenliegenden Halteabschnitt 10 die Öffnung 102 von außen zumindest abschnittsweise umrahmt wird (vgl. die Figuren 5 und 7 bis 9). Zudem umfasst die Haltevorrichtung 100 einen (bzgl. des Verkleidungsbauteils 103) innenliegenden Halteabschnitt 20, welcher von innen an der Öffnung 102 zur Auflage bringbar ist, wobei der innenliegende Halteabschnitt 20 eine Tragstruktur 21, 22 für den Sensor 101 aufweist. Unterschiedliche mögliche Ausführungsformen der Tragstruktur 21, 22 sind nicht abschließend in den Figuren 7 bis 9 und 10 gezeigt.

Ferner umfasst die Haltevorrichtung 100 einen Befestigungsmechanismus 30, durch welchen eine form- und/oder kraftschlüssige Befestigung der Haltevorrichtung 100 an einer Kante der Öffnung 102, insbesondere durch ein Einschieben der Kante 104 zwischen dem außenliegenden Halteabschnitt 10 und dem innenliegenden Halteabschnitt 20 der Haltevorrichtung 100, herstellbar ist.

Der Sensor 101 im Sinne der Erfindung kann vorzugsweise als ein optischer Sensor, bevorzugt in Form einer Kamera ausgebildet sein, wie dies in den Figuren 5 und 7 bis 9 zum Vorschein kommt. Der Sensor 101 ist dabei imstande, elektromagnetische Wellen, bspw. im sichtbaren Bereich oder im ultravioletten Bereich, durch die Öffnung 102 im außenliegenden Verkleidungsbauteil 103 zumindest zu empfangen, um den Außenbereich des Fahrzeuges zu überwachen, zu analysieren und/oder auszuwerten. Eine Ausführungsform des Sensors 101 in Form einer Kamera ist bevorzugt, da mithilfe der Kamera der Außenbereich des Fahrzeuges analysiert werden kann. Die Erkennung von Hindernissen kann dadurch verbessert werden. Ferner kann eine Kamera eine Erkennungstechnologie aufweisen, um bestimmte Objekte und/oder Personen zu verifizieren.

Gleichwohl ist es aber auch denkbar, dass der Sensor 101 einen Sender aufweisen kann, um elektromagnetische Wellen durch die Öffnung 102 im außenliegenden Verkleidungsbauteil 103 nach außen auszusenden, um den Außenbereich des Fahrzeuges abzutasten. Anschließend kann der Sensor 101 bspw. die vom Objekt reflektierten Wellen mithilfe eines Empfängers empfangen, um eine Präsenz des Objekts zu erfassen. Damit kann der Sensor 101 nach Art einer Lichtschranke arbeiten.

Der Sensor 101 kann weiterhin eine optische Taste, bspw. in Form eines Emblems des Fahrzeuges, auf die Fahrbahn projizieren, um einen Erfassungsbereich des Sensors 101 auf der Fahrbahn zu markieren. In diesem Erfassungsbereich kann ein Benutzer eine Aktivierungshandlung ausführen, die der Sensor 101 erfassen kann. Mithilfe der optischen Taste wird dem Benutzer signalisiert, wo der Erfassungsbereich des Sensors 101 ist. Die Erfassung der Aktivierungshandlung durch den Sensor 101 löst eine Bewegung des bewegbaren Teils, bspw. der Kofferraumklappe aus. Die Aktivierung des Sensors 101 kann weiterhin dazu genutzt werden, eine Vorfeldbeleuchtung des Fahrzeuges einzuschalten. Ferner ist es denkbar, dass der Sensor 101 mindestens eine oder mehrere Bewegungsmuster erfassen kann, die mindestens eine oder mehrere Funktionen nach sich ziehen können. So ist es denkbar, dass ein erstes Bewegungsmuster zu einem Öffnungsvorgang des bewegbaren Teils führt. Ein zweites Bewegungsmuster kann bspw. zu einem Schließvorgang des bewegbaren Teils führen.

Der Sensor 101 in Form einer Kamera kann ein reelles Bild des Außenbereiches des Fahrzeuges aufnehmen. Dadurch kann der Außenbereich des Fahrzeuges sicher überwacht werden, Aktivierungshandlungen und sogar komplexe Bewegungsmuster zuverlässig erkannt werden, und Störungsfaktoren beim Betrieb des Sensors 101 zuverlässig erkannt werden. Weiterhin kann mithilfe der Kamera ein potenzieller Benutzer zuverlässig erkannt werden. Zudem können mithilfe der Kamera Gegenstände und/oder Personen erkannt und damit geschützt werden, die im Wege des bewegbaren Teils des Fahrzeuges bei seiner Bewegung stehen.

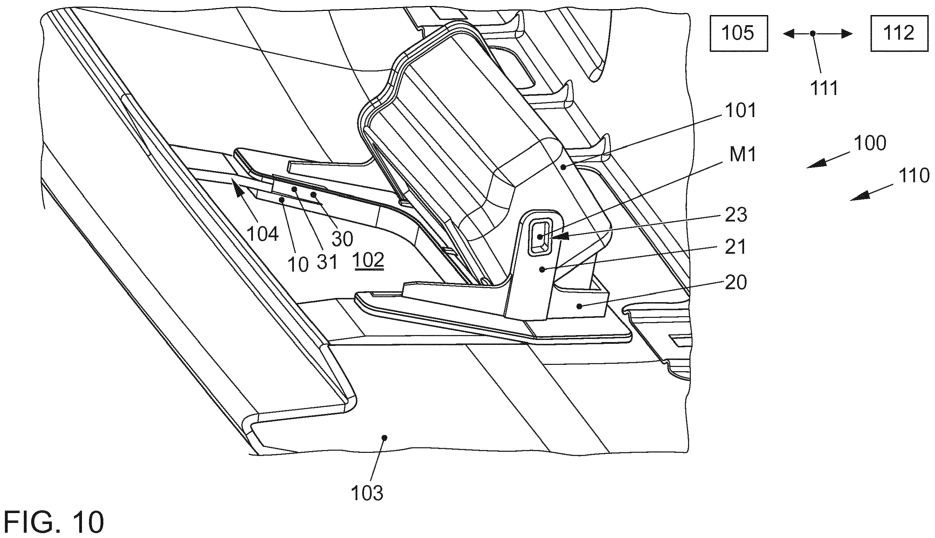

Der Sensor 101 kann einen Teil eines Sensorsystems 110 bilden, welches eine Steuereinheit 105 aufweisen kann, um den Sensor 101 anzusteuern. Der Sensor 101 bzw. seine Steuereinheit 105 kann mit einem Sicherheitssystem 112 des Fahrzeuges in einer Kommunikationsverbindung 111 stehen, um eine Berechtigung des Benutzers abzufragen, der versucht, den Sensor 101 zu betätigen. Die Kommunikationsverbindung 111 mit dem Sicherheitssystem 112 kann vorzugsweise drahtlos, bspw. mittels Funkwellen, erfolgen. Somit kann der Sensor 101 bzw. das Sensorsystem 110 einen Teil eines Keyless-Go-Systems oder eines Keyless-Entry-Systems des Fahrzeuges bilden (vgl. im Nachfolgenden die Figur 10).

Des Weiteren wie es in den Figuren 5 und 7 bis 10 zu erkennen ist, bilden der außenliegende Halteabschnitt 10 und der innenliegende Halteabschnitt 20 der Haltevorrichtung 100, vorzugsweise zusammen mit dem Befestigungsmechanismus 30, ein monolithisches und/oder materialeinheitliches Bauteil. Somit kann die Haltevorrichtung 100 einfach und bequem, sogar einhändig bei der Montage am Fahrzeug gehandhabt werden. Die monolithisch ausgebildete Haltevorrichtung 100 ermöglicht nach der Befestigung am Fahrzeug einen zuverlässigen Diebstahlschutz.

Der Befestigungsmechanismus 30 kann durch die mechanische Wechselwirkung mit der Öffnung 102, insbesondere mit der Kante 104 der Öffnung 102, im außenliegenden Verkleidungsbauteil 103 eine einfache und sichere, insbesondere diebstahlsichere und/oder verliersichere, vorzugsweise form- und/oder kraftschlüssige Befestigung der Haltevorrichtung 100 und somit des Sensors 101 am Fahrzeug ermöglichen.

Grundsätzlich ist es im Rahmen der Erfindung denkbar, dass der Befestigungsmechanismus 30 unterschiedliche Geometrien aufweisen kann, die eine form- und/oder kraftschlüssige Befestigung der Haltevorrichtung 100 am Fahrzeug ermöglichen können.

Der Befestigungsmechanismus 30 kann vorteilhafterweise zwischen dem außenliegenden Halteabschnitt 10 und dem innenliegenden Halteabschnitt 20 der Haltevorrichtung 100 ausgebildet sein. Dadurch bleibt der Befestigungsmechanismus 30 unzugänglich von außen und somit geschützt vor unbefugten Manipulationen. Da der Befestigungsmechanismus 30 auch nach seinem Auslösen verdeckt hinter dem außenliegenden Halteabschnitt 10 verbleibt, ist eine Auflösung des Befestigungsmechanismus 30 von außen nicht ohne einen erheblichen Aufwand möglich ist, zumindest nicht ohne die Haltevorrichtung 100 zu beschädigen und/oder Löcher in das außenliegende Verkleidungsbauteil 103 bohren zu müssen.

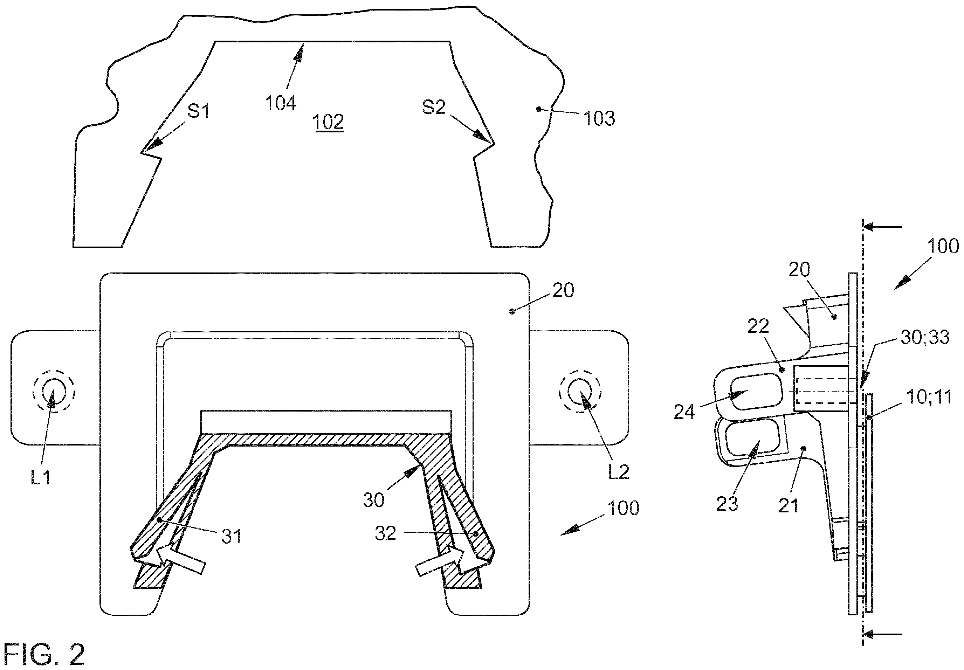

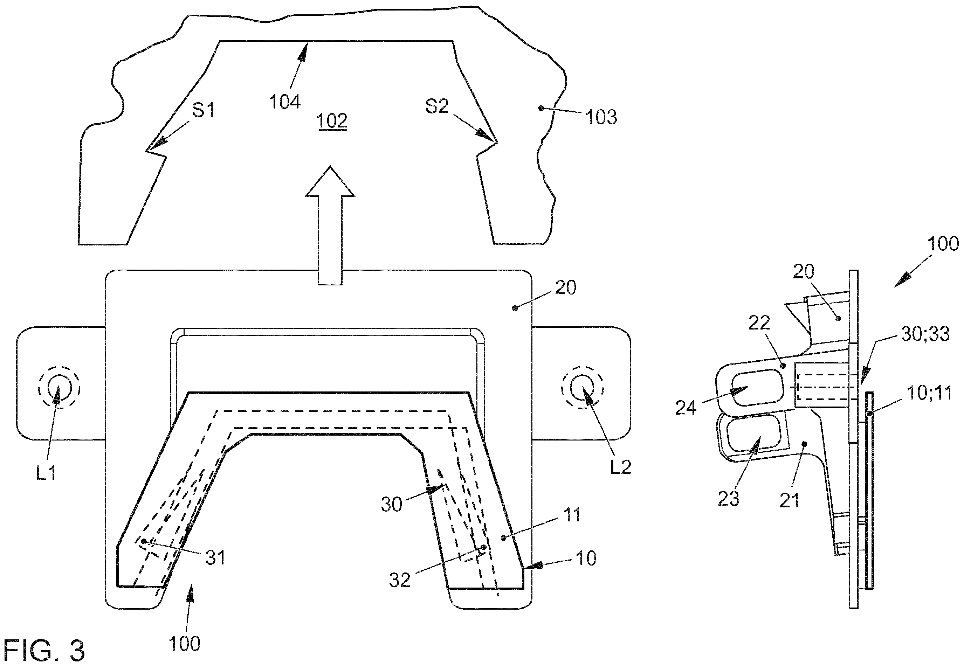

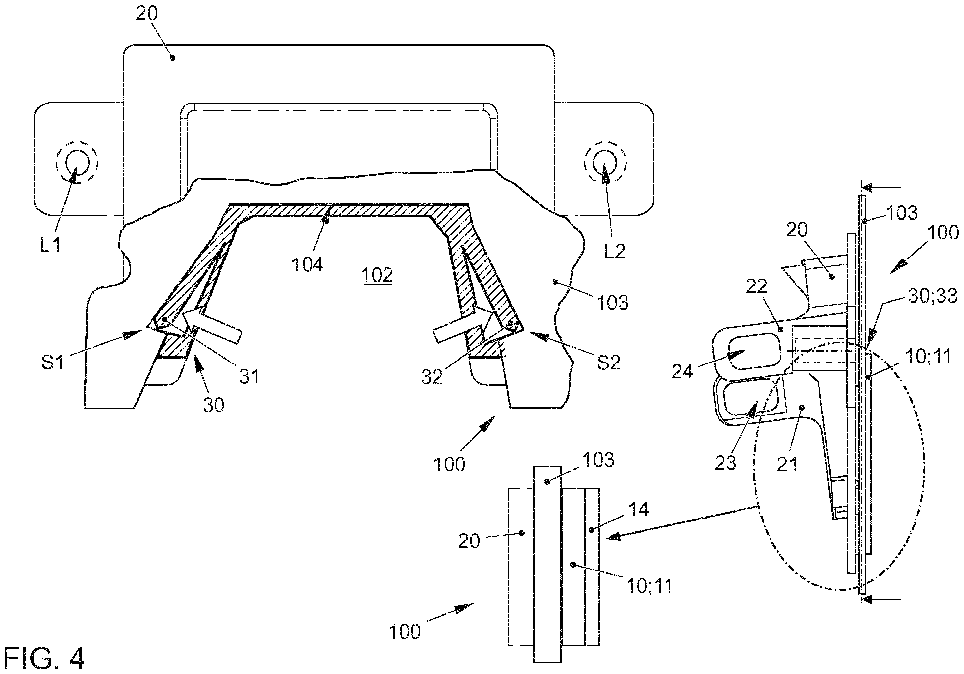

Die Figuren 1 bis 10 zeigen schematisch ein mögliches Ausführungsbeispiel des Befestigungsmechanismus 30, der eine Schnappkupplung bereitstellt, die an mindestens einem Hinterschnitt S1, S2 der Kante 104 der Öffnung 102 hinterschnappen bzw. verkanten kann. Das Wirkprinzip der Schnappkupplung ist in der Figur 2 gezeigt. Die Funktion der Schnappkupplung bei der Befestigung der Haltevorrichtung 100 an der Öffnung 102 wird im Nachfolgenden anhand der Figuren 3 und 4 erklärt.

Wie es die Figuren 3 und 4 zeigen, wird die Befestigung der Haltevorrichtung 100 an der Kante 104 der Öffnung 102 durch ein Einschieben der Kante 104 zwischen dem außenliegenden Halteabschnitt 10 und dem innenliegenden Halteabschnitt 20 hergestellt (s. insbesondere die linke Ansicht in der Figur 4).

Zunächst wird die Haltevorrichtung 100, wie dies mithilfe des Pfeils in der Figur 3 angedeutet ist, solange entlang der Öffnung 102 geschoben bis der Befestigungsmechanismus 30 auslösen kann, wie dies mithilfe der Pfeile in der Figur 4 angedeutet ist.

Die Figuren 3 und 4 zeigen, dass die Öffnung 102 sich zu einem Bereich verjüngen und in diesem engen Bereich mindestens einen Hinterschnitt S1, S2 für den Befestigungsmechanismus 30 aufweisen kann. Dieser Bereich kann in Richtung der Fahrbahn nach unten zeigen (vgl. die Figuren 5 und 7 bis 9).

Für die Schritte gemäß den Figuren 3 und 4 kann ein Monteur mit nur einer Hand die Haltevorrichtung 100 halten, dann die Haltevorrichtung 100 an der Öffnung 102 in einem breiten, insbesondere bzgl. der Fahrbahn oberen, Bereich positionieren, sodass die Kante 104 der Öffnung 102 zwischen dem außenliegenden Halteabschnitt 10 und dem innenliegenden Halteabschnitt 20 aufgenommen werden kann.

Dann kann die Haltevorrichtung 100, immer noch mit einer Hand gehalten, so entlang des Pfeils der Figur 3 geschoben werden bis die Kante 104 der Öffnung zwischen dem außenliegenden Halteabschnitt 10 und dem innenliegenden Halteabschnitt 20 gelangt.

Wenn der Befestigungsmechanismus 30 schließlich mit mindestens einem Hinterschnitt S1, S2 in dem engen unteren Bereich der Öffnung 102 in Berührung kommt, kann er dort auslösen. Hierzu kann der Befestigungsmechanismus 30 mindestens ein erstes Rastelement 31 und/oder ein zweites Rastelement 32 für die Kante 104 der Öffnung 102 aufweisen, durch welches bzw. durch welche die form- und/oder kraftschlüssige Befestigung der Haltevorrichtung 100 mit mindestens einem ersten Hinterschnitt S1 und/oder einem zweiten Hinterschnitt S2 an der Kante 104 der Öffnung 102 hergestellt wird. Ein solcher Befestigungsmechanismus 30 ist deswegen vorteilhaft, um die Befestigung der Haltevorrichtung 100 in eine Richtung (s. den Pfeil in der Figur 3) zu ermöglichen und in eine andere Richtung (entgegengesetzt zu dem Pfeil in der Figur 3) ein Abnehmen der Haltevorrichtung 100 zu verhindern.

Wie es in der Figur 4 gezeigt ist, kann das erste Rastelement 31 und/oder das zweite Rastelement 32 durch Einschieben der Haltevorrichtung 100 in die Öffnung 102 gespreizt bzw. vorgespannt werden und nach dem Erreichen des unteren engen Bereiches der Öffnung 102 an dem jeweiligen Hinterschnitt S1, S2 sich sprungartig entspannen und in den Hinterschnitten S1, S2 verrasten. Das erste Rastelement 31 und das zweite Rastelement 32 bilden dabei eine Art Greifarme.

Ferner ist es denkbar, dass die Rastelemente 31, 32 federnd und/oder elastisch verformbar ausgebildet sein können, um bei einem formschlüssigen Wechselwirken der Rastelemente 31, 32 mit den Hinterschnitten S1, S2 eine kraftschlüssige Beaufschlagung der Rastelemente 31, 32 in den Eingriff mit den Hinterschnitten S1, S2 zu ermöglichen. Eine solche Befestigung ist vorteilhafterweise ruckelfrei, stabil und ermöglicht außerdem einen Ausgleich von Toleranzen zwischen den Bauteilen.

Wie es die Figur 4 des Weiteren andeutet, kann der Befestigungsmechanismus 30 eine Labyrinthführung 33 zwischen dem außenliegenden Halteabschnitt 10 und dem innenliegenden Halteabschnitt 20 für die Kante 104 der Öffnung 102 bilden. Auf diese Weise kann der Bereich hinter der Haltevorrichtung 100 nur durch Befestigen der Haltevorrichtung 100 an der Öffnung 102 im außenliegen Verkleidungsbauteil 103 abgedichtet werden. Zusätzlich kann ein separates, bspw. gummielastisches, Dichtungselement innerhalb des Befestigungsmechanismus 30 vorgesehen sein, um die Wirkung der Abdichtung zu erhöhen.

Gleichwohl ist es aber auch denkbar, dass der Befestigungsmechanismus 30 einfache Schrauben aufweisen kann, mithilfe derer die Haltevorrichtung 100 am außenliegenden Verkleidungsbauteil 103 des Fahrzeuges befestigt werden kann. Den außenliegenden Halteabschnitt 10 der Haltevorrichtung 100 kann dabei der Schraubenkopf bilden, der bspw. in einer Versenkung am außenliegenden Verkleidungsbauteil 103 zwecks bündiger Anordnung versenkt werden kann. Der Schraubenkörper kann dabei den Befestigungsmechanismus 30 darstellen und mit dem innenliegenden Halteabschnitt 20 der Haltevorrichtung 100 verschraubt werden.

Zudem zeigen die Figuren 2, 3 und 4, dass der innenliegenden Halteabschnitt 20 mittels optionaler Schraublöcher L1, L2 von innen am außenliegenden Verkleidungsbauteil 103 befestigt werden kann. Die optionalen Schraublöcher L1, L2 können im Rahmen der Erfindung zusätzlich zum Befestigungsmechanismus 30 vorgesehen sein.

Wie es weiterhin die Figuren 1, 3 und 6 zeigen, kann der außenliegende Halteabschnitt 10 einen Rahmen 11 aufweisen, durch welchen die Öffnung 102 von außen zumindest abschnittsweise umrahmt wird. Der Rahmen 11 kann vorteilhafterweise zur Positionierung für die Haltevorrichtung 100 an der Öffnung 102 dienen. Zudem dient der Rahmen 11 der mechanischen Verstärkung der Haltevorrichtung 100 und gleichzeitig des außenliegenden Verkleidungsbauteils 103 im Bereich der Öffnung 102.

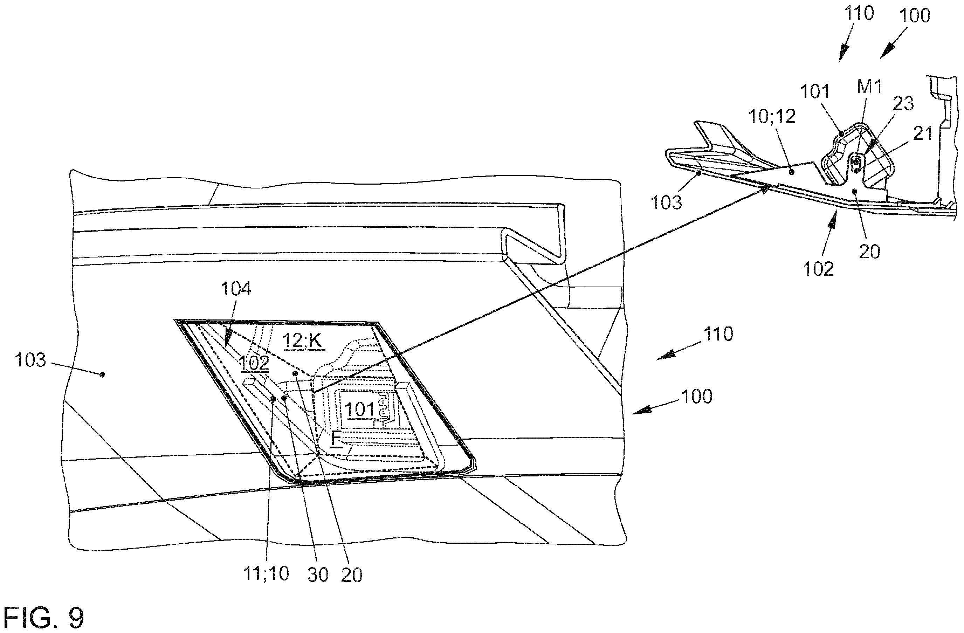

Wie es außerdem die Figuren 5 bis 9 zeigen, kann der Rahmen 11 eine Abdeckfunktion erfüllen, in dem er ein Abdeckelement 12 aufnimmt (s. die Figuren 5 bis 8) oder in einem Stück mit einem Abdeckelement 12 ausgebildet wird (s. die Figur 9).

Über das Abdeckelement 12 kann der Rahmen 11 eine Filterfunktion und/oder Lichtleitfunktion für den Sensor 101 erfüllen.

Wie es die Figuren 5 bis 9 verdeutlichen, kann der Rahmen 11 eine, insbesondere offene U-Form, bilden, die an die Form der Öffnung 102 im außenliegenden Verkleidungsbauteil 103 des Fahrzeuges angepasst ist. Die U-Form des Rahmens 11 weitet sich in Richtung der offenen Schenkel auf, sodass die U-Form an einer sich im bzgl. der Fahrbahn unteren Bereich verjüngenden Öffnung 102 bündig anliegen kann (vgl. die Figuren 5 und 7 bis 9).

Ebenfalls bündig, insbesondere flächenbündig kommt der Rahmen 11 von außen am außenliegenden Verkleidungsbauteil 103 zur Auflage. Der Rahmen 11 übersteht dabei die Kante 104 der Öffnung 102 im unteren Bereich der Öffnung 102, der in Richtung der Fahrbahn zeigt, und umrahmt somit die Öffnung 102.

Wie es die Figuren 5 bis 9 weiterhin zeigen, kann der außenliegende Halteabschnitt 10 ein Abdeckelement 12 aufweisen, durch welches der Sensor 101 Informationen mit dem Außenbereich des Fahrzeuges, insbesondere mithilfe von elektromagnetischen Wellen, austauschen kann. Wie bereits oben erwähnt kann das Abdeckelement 12 am Rahmen 11 befestigt sein (s. die Figuren 5 bis 8) oder einen integralen Teil bzw. Abschnitt des Rahmens 11 (s. die Figur 9) bilden.

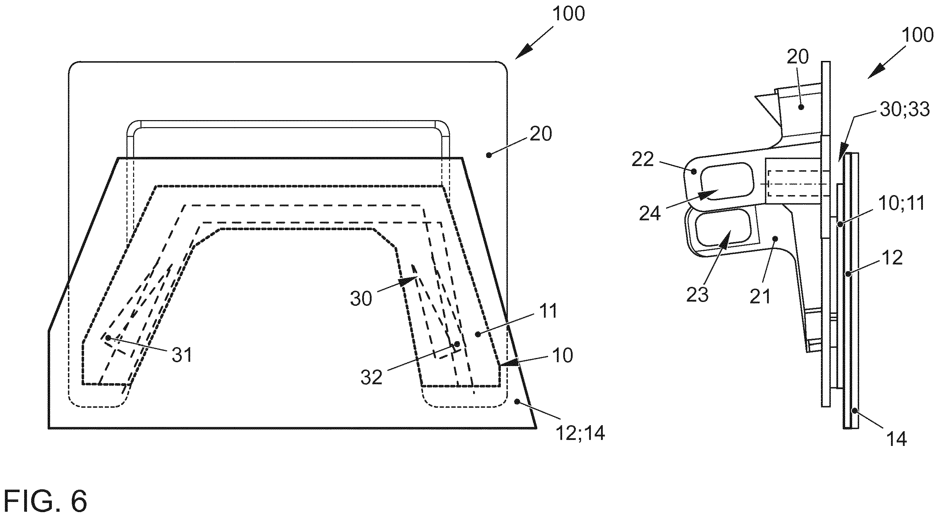

Die Figuren 5 und 6 zeigen ein mögliches Ausführungsbeispiel des Abdeckelementes 12. Hierbei kann das Abdeckelement 12 im Wesentlichen planar ausgebildet sein und von außen im Wesentlichen flächenbündig das außenliegende Verkleidungsbauteil 103 im Bereich der Öffnung 102 abschließen. Mit anderen Worten kann das Abdeckelement 12 das außenliegende Verkleidungsbauteil 103 vervollständigen.

Ferner kann die Erfindung bei einer Haltevorrichtung vorsehen, dass der außenliegende Halteabschnitt, insbesondere das Abdeckelement, durchlässig für elektromagnetische Wellen, insbesondere für bestimmte Wellenlängen des elektromagnetischen Spektrums, vorzugsweise für sichtbares Licht oder ultraviolettes Licht, ausgebildet ist. Somit kann das Abdeckelement den Sensor zuverlässig schützen und/oder abdichten und die störungsfreie Funktion des Sensors, insbesondere den störungsfreien Austausch von Information mit dem Außenbereich des Fahrzeuges ermöglichen.

Wie es die Figuren 7 bis 9 mithilfe von weiteren Ausführungsbeispielen zeigen, kann das Abdeckelement 12 einen, insbesondere trichterförmigen und/oder prismatischen und/oder pyramidalen, Objektivkörper K (bzw. Linse K) für den Sensor 101 bilden. Wie es weiterhin die Figuren 7 bis 9 zeigen, ist der Objektivkörper K bzgl. des außenliegenden Verkleidungsbauteils 103 nach innen zum Sensor 101 gewölbt. Ein auf diese Weise ausgebildeter Objektivkörper K dient dazu, die elektromagnetischen Wellen zu sammeln, zu formen und/oder zu bündeln. Zudem dient der Objektivkörper K dazu, dass die elektromagnetischen Wellen wenig Steuerung und Energieverluste erfahren bis sie an die Bildebene bzw. lichtempfindliche Fläche des Sensors 101 gelangen. Die elektromagnetischen Wellen werden durch das Abdeckelement 12 derart einfangen, dass ein reelles Bild in der Bildebene des Sensors 101 mit einer hohen Intensität erzeugt wird. Somit werden die Messergebnisse des Sensors 101 verbessert.

Weiterhin ist es denkbar, dass der Boden des prismatischen Abdeckelementes 12 bzw. Objektivkörpers K eine Licht sammelnde Fläche F aufweist, bspw. in Form einer Sammellinse. Diese Licht sammelnde Fläche F des Objektivkörpers K kann vorzugsweise an einem Detektionsbereich, insbesondere in Form eines Objektivs, des Sensors 101 zur Auflage kommen und/oder mit dem Detektionsbereich des Sensors 101, insbesondere stoffschlüssig, vorzugsweise durch Schweißen, bevorzugt durch Laserschweißen oder Ultraschallschweißen, verbunden sein. Durch die Licht sammelnde Fläche F können Verluste und Streueffekte beim Empfangen der elektromagnetischen Wellen innerhalb des Sensors 101 reduziert werden.

Des Weiteren kann gemäß allen Ausführungsformen des Abdeckelementes 12 als ein separates Bauteil gemäß den Figuren 5 bis 8 oder als ein Abschnitt des Rahmens 11 gemäß der Figur 9 vorgesehen sein, dass das Abdeckelement 12 mindestens eine Funktionsbeschichtung 14 aufweist, um das Abdeckelement 12 vor Verschmutzung und/oder vor Verkratzen zu schützen.

Gemäß allen Ausführungsformen des Abdeckelementes 12 kann die Funktionsbeschichtung 14 einen optischen Filter für bestimmte Wellenlängen des elektromagnetischen Spektrums aufweisen, um bestimmte Wellenlängen des elektromagnetischen Spektrums, vorzugsweise für sichtbares Licht oder ultraviolettes Licht, durchzulassen.

Zudem kann gemäß allen Ausführungsformen des Abdeckelementes 12 vorgesehen sein, dass die Funktionsbeschichtung 14 eine LED-Schicht aufweisen kann, um das Abdeckelement 12 in einem Ruhemodus des Sensors 101 abzudunkeln oder in einem Betriebsmodus des Sensors 101 durchlässig zumindest für bestimmte elektromagnetische Wellen zu schalten.

Außerdem kann gemäß allen Ausführungsformen des Abdeckelementes 12 vorgesehen sein, dass die Funktionsbeschichtung 14 eine Tönungs- und/oder Lackierungsschicht aufweisen kann, um das Abdeckelement 12 farblich hervorzuheben und/oder an das Erscheinungsbild des außenliegenden Verkleidungsbauteils 103 anzupassen, vorzugsweise ohne die Durchlässigkeit der Funktionsbeschichtung 14 zu beeinträchtigen.

Anhand der Figuren 7, 8 und 9 werden im Folgenden unterschiedliche Ausführungsformen der Tragstruktur 21, 22 für den Sensor 101 beschrieben.

Die Tragstruktur 21, 22 kann gemäß den Ausführungsformen der Figuren 7 und 9 ein erstes Befestigungselement 21 und ein zweites Befestigungselement 22 für den Sensor 101 aufweisen, durch welche eine form- und/oder kraftschlüssige Befestigung des Sensors 101 an der Haltevorrichtung 100 hergestellt wird. Die Befestigung des Sensors 101 an der Haltevorrichtung 100 kann im Rahmen der Erfindung vor oder nach dem Befestigen der Haltevorrichtung 100 an der Öffnung 102 im außenliegenden Verkleidungsbauteil 103 erfolgen.

Gemäß den Ausführungsformen der Tragstruktur 21, 22 in den Figuren 7 und 9 kann die Tragstruktur 21, 22 bzw. das erste Befestigungselement 21 und das zweite Befestigungselement 22 eine, vorzugsweise U-förmige, Halteklammer für den Sensor 101 bilden. Somit kann der Sensor 101 einfach in die Halteklammer eingesteckt werden, um an der Haltevorrichtung 100 befestigt zu werden. An den Schenkeln der Halteklammer, die durch das erste Befestigungselement 21 und das zweite Befestigungselement 22 gebildet ist, ist jeweils ein Befestigungsmittel 23, 24 in Form einer Öffnung bzw. eines Durchbruches ausgebildet, in welchem jeweils ein entsprechendes Befestigungsgegenmittel M1, M2 in Form von Nocken aufgenommen werden kann. Die Befestigungsgegenmittel M1, M2 können dabei am Gehäuse des Sensors 101 ausgebildet sein.

Die Befestigungsmittel 23, 24 an den Schenkeln der Halteklammer, die durch das erste Befestigungselement 21 und das zweite Befestigungselement 22 gebildet ist, und die Befestigungsgegenmittel M1, M2 am Gehäuse des Sensors 101 sind in einer vergrößerten Darstellung in der Figur 10 gezeigt.

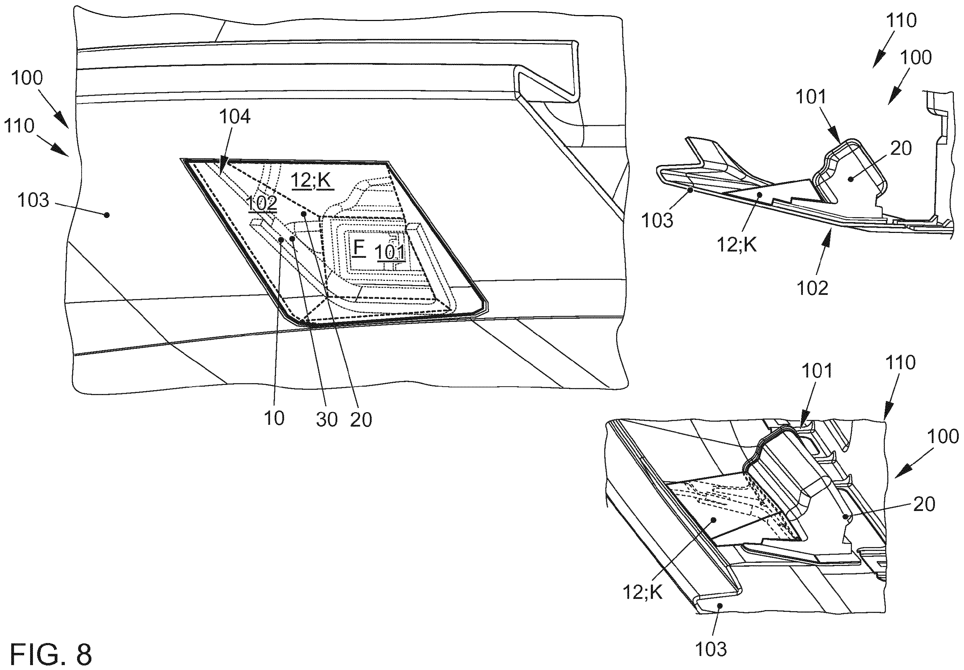

Gemäß der Ausführungsformen der Tragstruktur 21, 22 in der Figur 8 kann das Gehäuse des Sensors 101 ein monolithisches und/oder materialeinheitliches Bauteil, insbesondere ein 3D-Bauteil, vorzugsweise ein Spritzgussbauteil, bevorzugt ein 2-Komponenten-Spritzgussbauteil, besonders bevorzugt ein 3D-Druckbauteil, mit der restlichen Haltevorrichtung 100 bilden. Das Abdeckelement 12 für den Sensor 101 kann auch in der Ausführungsform der Figur 8 als ein separates Bauteil oder als ein integraler Teil des Rahmens 11 bzw. des außenliegenden Halteabschnittes 10 der Haltevorrichtung 100 ausgeführt sein.

Gemäß der Erfindung bildet der Sensor 101 zusammen mit der Haltevorrichtung 100 ein Sensorsystem 110 zum Betätigen eines bewegbaren Teils, insbesondere einer Kofferraumklappe, eines Fahrzeuges. Der Sensor 101 weist seine Steuereinheit 105 auf, die mit einem Sicherheitssystem 112 des Fahrzeuges in einer Kommunikationsverbindung 111 steht. Das Sicherheitssystem 112 fragt eine Berechtigung des Benutzers ab, der versucht, das bewegbare Teil zu betätigen. Im Rahmen der Erfindung ist es denkbar, dass zuerst der Sensor 101 aktiviert wird und danach die Berechtigungsabfrage durch das Sicherheitssystem 112 eingeleitet wird oder dass zuerst ein berechtigter Benutzer durch des Sicherheitssystem 112 erkannt wird und danach der Sensor 101 eingeschaltet wird, um eine Aktivierungshandlung zu erfassen. Die Aktivierungshandlung führt zum Öffnen des bewegbaren Teils. Ferner kann der Sensor 101 mehrere Aktivierungshandlungen und sogar komplexe Bewegungsmuster erfassen, die mindestens eine oder mehrere Funktionen nach sich ziehen können. So ist es denkbar, dass ein erstes Bewegungsmuster zu einem Öffnungsvorgang des bewegbaren Teils und ein zweites Bewegungsmuster zu einem Schließvorgang des bewegbaren Teils führen können. Zudem kann die gleiche oder eine zweite Aktivierungshandlung, die durch den Sensor 101 erfasst wird, dazu dienen, eine Vorfeldbeleuchtung des Fahrzeuges einzuschalten

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- 10: außenliegender Halteabschnitt
- 11: Rahmen
- 12: Abdeckelement
- 14: Funktionsbeschichtung

- 20: innenliegender Halteabschnitt
- 21: Tragstruktur, erstes Befestigungselement
- 22: Tragstruktur, zweites Befestigungselement
- 23: Befestigungsmittel
- 24: Befestigungsmittel

- 30: Befestigungsmechanismus
- 31: erstes Rastelement
- 32: zweites Rastelement
- 33: Labyrinthführung

- 100: Haltevorrichtung
- 101: Sensor
- 102: Öffnung
- 103: außenliegendes Verkleidungsbauteil
- 104: Kante
- 105: Steuereinheit

- 110: Sensorsystem
- 111: Kommunikationsverbindung
- 112: Sicherheitssystem

- F: Fläche
- K: Objektivkörper
- L1: Schraubloch
- L2: Schraubloch
- M1: Befestigungsgegenmittel
- M2: Befestigungsgegenmittel
- S1: erster Hinterschnitt
- S2: zweiter Hinterschnitt

## Patentansprüche

1. Haltevorrichtung (100) für einen, insbesondere optischen, Sensor (101) an einer Öffnung (102) in einem außenliegenden Verkleidungsbauteil (103) eines Fahrzeuges, vorzugsweise an einem Stoßfänger oder einem Diffusor,
wobei der Sensor (101) durch die Öffnung (102) Informationen mit dem Außenbereich des Fahrzeuges, insbesondere mithilfe von elektromagnetischen Wellen, austauschen kann,
aufweisend:
einen außenliegenden Halteabschnitt (10), welcher von außen an der Öffnung (102) zur Auflage bringbar ist,
wobei durch den außenliegenden Halteabschnitt (10) die Öffnung (102) von außen zumindest abschnittsweise umrahmt wird,
einen innenliegenden Halteabschnitt (20), welcher von innen an der Öffnung (102) zur Auflage bringbar ist,
wobei der innenliegende Halteabschnitt (20) eine Tragstruktur (21, 22) für den Sensor (101) aufweist,
und einen Befestigungsmechanismus (30), durch welchen eine form- und/oder kraftschlüssige Befestigung der Haltevorrichtung (100) an einer Kante (104) der Öffnung (102) herstellbar ist.

2. Haltevorrichtung (100) nach Anspruch 1,
**dadurch gekennzeichnet,**
**dass** der Befestigungsmechanismus (30) zwischen dem außenliegenden Halteabschnitt (10) und dem innenliegenden Halteabschnitt (20) ausgebildet ist,
wobei insbesondere die form- und/oder kraftschlüssige Befestigung der Haltevorrichtung (100) an der Kante (104) der Öffnung (102) durch ein Einschieben der Kante (104) zwischen dem außenliegenden Halteabschnitt (10) und dem innenliegenden Halteabschnitt (20) herstellbar ist.

3. Haltevorrichtung (100) nach Anspruch 1 oder 2,
**dadurch gekennzeichnet,**
**dass** der außenliegende Halteabschnitt (10) einen Rahmen (11) aufweist, durch welchen die Öffnung (102) von außen zumindest abschnittsweise umrahmt wird,
und/oder dass der Rahmen (11) von außen im Wesentlichen flächenbündig zum außenliegenden Verkleidungsbauteil (103) zur Auflage bringbar ist.

4. Haltevorrichtung (100) nach einem der vorhergehenden Ansprüche,
**dadurch gekennzeichnet,**
**dass** der außenliegende Halteabschnitt (10) ein Abdeckelement (12) aufweist, durch welches der Sensor (101) Informationen mit dem Außenbereich des Fahrzeuges, insbesondere mithilfe von elektromagnetischen Wellen, austauschen kann,
und/oder dass das Abdeckelement (12) von außen im Wesentlichen flächenbündig zum außenliegenden Verkleidungsbauteil (103) zur Auflage bringbar ist
und/oder dass der außenliegende Halteabschnitt (10), insbesondere das Abdeckelement (12), durchlässig für elektromagnetische Wellen, insbesondere für bestimmte Wellenlängen des elektromagnetischen Spektrums, vorzugsweise für sichtbares Licht oder ultraviolettes Licht, ausgebildet ist.

5. Haltevorrichtung (100) nach einem der vorhergehenden Ansprüche,
**dadurch gekennzeichnet,**
**dass** der außenliegende Halteabschnitt (10), insbesondere das Abdeckelement (12), eine Funktionsbeschichtung (14) aufweist
und/oder dass die Funktionsbeschichtung (14) einen optischen Filter für bestimmte Wellenlängen des elektromagnetischen Spektrums, vorzugsweise für sichtbares Licht oder ultraviolettes Licht, aufweist, um diese Wellenlängen durchzulassen
und/oder dass die Funktionsbeschichtung (14) eine LED-/ oder LCD-Schicht aufweist, um den außenliegenden Halteabschnitt (10), insbesondere das Abdeckelement (12), in einem Ruhemodus des Sensors (101) abzudunkeln oder in einem Betriebsmodus des Sensors (101) durchlässig zumindest für bestimmte elektromagnetische Wellen zu schalten
und/oder dass die Funktionsbeschichtung (14) eine Tönungs- und/oder Lackierungsschicht aufweist.

6. Haltevorrichtung (100) nach einem der vorhergehenden Ansprüche,
**dadurch gekennzeichnet,**
**dass** der außenliegende Halteabschnitt (10), insbesondere das Abdeckelement (12), einen, insbesondere trichterförmigen und/oder prismatischen und/oder pyramidalen, Objektivkörper (K) aufweist, um die elektromagnetischen Wellen zu sammeln, zu formen und/oder zu bündeln,
und/oder dass der Objektivkörper (K) bezüglich des außenliegenden Verkleidungsbauteils (103) nach innen zum Sensor (101) gewölbt ist,
und/oder dass der Objektivkörper (K) zumindest eine Licht sammelnde Fläche (F) aufweist, die an einem Detektionsbereich des Sensors (101) zur Auflage bringbar und/oder mit dem Detektionsbereich des Sensors (101), insbesondere stoffschlüssig, vorzugsweise durch Schweißen, bevorzugt durch Laserschweißen oder Ultraschallschweißen, verbindbar ist.

7. Haltevorrichtung (100) nach einem der vorhergehenden Ansprüche,
**dadurch gekennzeichnet,**
**dass** der außenliegende Halteabschnitt (10), der innenliegende Halteabschnitt (20), die Tragstruktur (21, 22) für den Sensor (101) an der Haltevorrichtung (100) und der Befestigungsmechanismus (30) für die Haltevorrichtung (100) an der Kante (104) der Öffnung (102) ein monolithisches und/oder materialeinheitliches Bauteil, insbesondere ein 3D-Bauteil, vorzugsweise ein Spritzgussbauteil, bevorzugt ein 2-Komponenten-Spritzgussbauteil, besonders bevorzugt ein 3D-Druckbauteil, bilden.

8. Haltevorrichtung (100) nach einem der vorhergehenden Ansprüche,
**dadurch gekennzeichnet,**
**dass** der Befestigungsmechanismus (30) eine Labyrinthführung (33) zwischen dem außenliegenden Halteabschnitt (10) und dem innenliegenden Halteabschnitt (20) für die Kante (104) der Öffnung (102) aufweist.

9. Haltevorrichtung (100) nach einem der vorhergehenden Ansprüche,
**dadurch gekennzeichnet,**
**dass** der Befestigungsmechanismus (30) mindestens ein erstes Rastelement (31) und/oder ein zweites Rastelement (32) für die Kante (104) der Öffnung (102) aufweist, durch welches bzw. durch welche eine form- und/oder kraftschlüssige Befestigung der Haltevorrichtung (100) mit mindestens einem ersten Hinterschnitt (S1) und/oder einem zweiten Hinterschnitt (S2) an der Kante (104) der Öffnung (102) herstellbar ist und/oder dass das erste Rastelement (31) und/oder das zweite Rastelement (32) federnd und/oder elastisch verformbar ausgebildet sind,
und/oder dass das erste Rastelement (31) und/oder das zweite Rastelement (32) Greifarme bilden, die beim Einschieben der Kante (104) der Öffnung (102) zwischen dem außenliegenden Halteabschnitt (10) und dem innenliegenden Halteabschnitt (20) spreizbar sind bis das erste Rastelement (31) und/oder das zweite Rastelement (32) an mindestens einem ersten Hinterschnitt (S1) und/oder an einem zweiten Hinterschnitt (S2) an der Kante (104) der Öffnung (102) einschnappen können.

10. Haltevorrichtung (100) nach einem der vorhergehenden Ansprüche,
**dadurch gekennzeichnet,**
**dass** die Tragstruktur (21, 22) mindestens ein erstes Befestigungselement (21) und/oder ein zweites Befestigungselement (22) für den Sensor (101) aufweist, durch welches bzw. durch welche eine form- und/oder kraftschlüssige Befestigung des Sensors (101) an der Haltevorrichtung (100) herstellbar ist,
und/oder dass die Tragstruktur (21, 22) eine, vorzugsweise U-förmige, Halteklammer für den Sensor (101), insbesondere zwischen dem ersten Befestigungselement (21) und dem zweiten Befestigungselement (22), bildet
und/oder dass die Tragstruktur (21, 22) mindestens ein Befestigungsmittel (23, 24), insbesondere am ersten Befestigungselement (21) und/oder am zweiten Befestigungselement (22), aufweist, welches mit einem Befestigungsgegenmittel (M1, M2) des Sensors (101) in eine form- und/oder kraftschlüssige Verbindung bringbar ist.

11. Sensorsystem (110) zum Betätigen eines bewegbaren Teils, insbesondere einer Kofferraumklappe, eines Fahrzeuges, aufweisend:
eine Haltevorrichtung (100) nach einem der vorhergehenden Ansprüche und
einen, insbesondere optischen, Sensor (101), der mithilfe der Haltevorrichtung (100) an einer Öffnung (102) in einem außenliegenden Verkleidungsbauteil (103) des Fahrzeuges, vorzugsweise an einem Stoßfänger oder einem Diffusor, befestigbar ist,
wobei der Sensor (101) durch die Öffnung (102) Informationen mit dem Außenbereich des Fahrzeuges, insbesondere mithilfe von elektromagnetischen Wellen, austauschen kann.

12. Sensorsystem (110) nach dem vorhergehenden Anspruch,
**dadurch gekennzeichnet,**
**dass** der Sensor (101) dazu ausgebildet ist, eine Vorfeldbeleuchtung des Fahrzeuges einzuschalten, wenn der Sensor (101) eine Aktivierungshandlung eines, insbesondere berechtigten, Benutzers erfasst,
und/oder dass der Sensor (101) dazu ausgebildet ist, eine optische Taste, insbesondere ein Emblem des Fahrzeuges, auf die Fahrbahn zu projizieren, um einen Erfassungsbereich des Sensors (101) zu markieren, in welchem eine Aktivierungshandlung eines, insbesondere berechtigten, Benutzers erfasst werden kann.

13. Sensorsystem (110) nach einem der vorhergehenden Ansprüche,
**dadurch gekennzeichnet,**
**dass** das Sensorsystem (110) eine Sende- und Empfangseinheit für eine Kommunikationsverbindung (111) zu einem Sicherheitssystem (112) des Fahrzeuges aufweist, welches dazu ausgebildet ist, eine Berechtigung eines Benutzers, insbesondere mittels einer ID-Abfrage, abzufragen
und/oder dass der Sensor (101) dazu ausgelegt ist, ein Sicherheitssystem (112) des Fahrzeuges zu wecken, um eine ID-Abfrage durchzuführen, wenn eine Aktivierungshandlung eines Benutzers durch den Sensor (101) erfasst wurde, bevor das bewegbare Teil betätigt wird,
oder dass der Sensor (101) einschaltbar ist, wenn ein berechtigter Benutzer durch das Sicherheitssystem (112) des Fahrzeuges verifiziert wurde.

14. Verfahren zum Befestigen eines, insbesondere optischen, Sensors (101), an einer Öffnung (102) in einem außenliegenden Verkleidungsbauteil (103) eines Fahrzeuges, vorzugsweise an einem Stoßfänger oder einem Diffusor, mithilfe einer Haltevorrichtung (100) nach einem der vorhergehenden Vorrichtungsansprüche,
wobei der Sensor (101) durch die Öffnung (102) Informationen mit dem Außenbereich des Fahrzeuges, insbesondere mithilfe von elektromagnetischen Wellen, austauschen kann,
wobei das Verfahren folgende Schritte aufweist:
a) Ansetzen der Haltevorrichtung (100) an der Öffnung (102), sodass die Kante (104) der Öffnung (102) zwischen dem außenliegenden Halteabschnitt (10) und dem innenliegenden Halteabschnitt (20) der Haltevorrichtung (100) aufgenommen werden kann,
b) Verschieben der Haltevorrichtung (100) entlang der Öffnung (102) bis der Befestigungsmechanismus (30) der Haltevorrichtung (100) mit der Kante (104) der Öffnung (102) eine form- und/oder kraftschlüssige Verbindung herstellt.

15. Verfahren nach dem vorhergehenden Anspruch,
**dadurch gekennzeichnet,**
**dass** das Verfahren mindestens einen weiteren Schritt aufweist:
c) Befestigen des Sensors (101) an der Tragstruktur (21, 22),
wobei insbesondere der Schritt c) vor dem Schritt a) oder nach dem Schritt b) ausgeführt wird.
